# EUROPEAN PATENT APPLICATION

(11) **EP 4 174 642 A1**
(43) Date of publication of application: **03.05.2023**
(21) Application number: 21833022.3
(22) Date of filing: 07.05.2021
(51) Int. Cl.: G06F 8/61, G06F 8/71

(54) **METHOD AND DEVICE FOR INSTALLING PROGRAM**

(30) Priority: 28.06.2020 CN 202010594833
(71) Applicant: BEIJING WODONG TIANJUN INFORMATION TECHNOLOGY CO., LTD., 100176 Beijing (CN); Beijing Jingdong Century Trading Co., Ltd., Beijing 100176 (CN)
(72) Inventor: WANG, Shaohua, Beijing 100176 (CN)
(74) Representative: Müller-Boré & Partner Patentanwälte PartG mbB
(86) International application number: PCT/CN2021/092021
(87) International publication number: WO 2022/001363

(57) **Abstract**

A method and device for installing a program, relating to the field of device configuration. The method comprises: acquiring network information of a device on which a target program is to be installed (201); in response to determining that the network information of the device on which the target program is to be installed satisfies a preset program installation condition, sending device information of the device on which the target program is to be installed (202); receiving program information of the target program corresponding to the device information, the program information of the target program comprising a download address of the target program (203); and downloading the target program according to the download address of the target program, and installing the target program on the device on which the target program is to be installed (204). The method can improve the efficiency and accuracy of program installation and reduce human cost.

## Description

The present patent application claims priority to Chinese Patent Application No. 202010594833.0 titled "METHOD AND DEVICE FOR INSTALLING PROGRAM" filed on June 28, 2020, the full text of which is incorporated herein by reference.

### TECHNICAL FIELD

Embodiments of the present disclosure relate to the field of computer technology, more particularly, to the field of device configuration, and more particularly, to a method and apparatus for installing a program.

### BACKGROUND

At present, there are many intelligent devices in the online retail field (chain stores such as supermarkets and convenience stores and so on), such as a self-service cash register, a self-service meal order, an advertisement screen, and the like. These commercial devices require specialized service application software to be installed after the first time they arrive at a store. An existing way of installing service software for the commercial devices is performed one by one manually.

However, the method for manually installing service software one by one to the commercial devices is inefficient and will consume a large amount of labor.

### SUMMARY

The present disclosure provides a method and apparatus for installing a program, electronic device, and computer readable storage medium.

According to a first aspect of the present disclosure, there is provided a method for installing a program. The method may include: acquiring network information of a device to be installed with a target program; in response to determining that the network information of the device to be installed with the target program meets a preset program installation condition, sending device information of the device to be installed with the target program; receiving program information, corresponding to the device information, of the target program, the program information of the target program comprising a download address of the target program; and downloading the target program according to the download address of the target program and installing the target program to the device to be installed with the target program.

In some embodiments, receiving program information, corresponding to the device information, of the target program, includes: in response to the device to be installed with the target program acquiring an installation authorization, receiving the program information, corresponding to the device information, of the target program.

In some embodiments, the method further includes: sending installation state information of the target program.

In some embodiments, the network information and the device information of the device to be installed with the target program are acquired by: running preset automatic installation software in the device to be installed with the target program, and acquiring the network information and the device information of the device through a daemon process.

According to a second aspect of the present disclosure, there is provided a method for installing a program. The method may include: receiving device information of a device to be installed with a target program; determining, based on the device information, whether the device to be installed with the target program is an authenticated device; and in response to the device to be installed with the target program being an authenticated device, sending program information, corresponding to the device information, of the target program, the program information of the target program comprising a download address of the target program.

In some embodiments, the method further includes: in response to the device to be installed with the target program is not an authenticated device, sending an alert message.

In some embodiments, the method further includes: receiving installation state information of the target program of the device.

According to a third aspect of the present disclosure, there is provided an apparatus for installing a program. The apparatus may includes: an acquiring unit, configured to acquire network information of a device to be installed with a target program; a sending unit, configured to send device information of the device to be installed with the target program in response to determining that the network information of the device to be installed with the target program meets a preset program installation condition; a receiving unit, configured to receive program information, corresponding to the device information, of the target program, the program information of the target program comprising a download address of the target program; and an installing unit, configured to download the target program according to the download address of the target program and installing the target program to the device to be installed with the target program.

In some embodiments, the receiving unit includes: an authorizing module, configured to receive the program information, corresponding to the device information, of the target program in response to the device to be installed with the target program acquiring a installation authorization.

In some embodiments, the apparatus further includes: a sending module, configured to send the installation state information of the target program.

In some embodiments, the network information and the device information of the device to be installed with the target program are acquired by: running preset automatic installation software in the device to be installed with the target program, and acquiring the network information and the device information of the device through a daemon process.

According to a fourth aspect of the present disclosure, there is provided an apparatus for installing a program. the apparatus may includes: a device information receiving unit, configured to receive device information of a device to be installed with a target program; a determining unit, configured to determine, based on the device information, whether the device to be installed with the target program is an authenticated device; and a program information sending unit, configured to send program information, corresponding to the device information, of the target program in response to the device to be installed with the target program being an authenticated device, the program information of the target program comprising a download address of the target program.

In some embodiments, the apparatus further includes: an alerting unit, configured to send an alert message in response to the device to be installed with the target program is not an authenticated device.

In some embodiments, the apparatus further includes: a state receiving unit, configured to receive installation state information of the target program of the device.

According to a fifth aspect of the present disclosure, an embodiment of the present disclosure provides an electronic device including one or more processors: Storage means for storing one or more programs, when the one or more programs are executed by the one or more processors, such that the one or more processors implement a method for installing a program as provided in the first aspect or the second aspect.

According to a sixth aspect of the present disclosure, an embodiment of the present disclosure provides a computer readable storage medium having stored thereon a computer program, wherein the program, when executed by a processor, implements the method for installing a program provided in the first aspect or the second aspect.

According to a seventh aspect of the present disclosure, an embodiment of the present disclosure provides a system for installing a program. The system may include: a server and a client, the server communicates with the client, the above-mentioned client is configured to implement the method for installing a program provided in the first aspect, the above-mentioned server is configured to implement the method for installing a program provided in the second aspect.

According to the method and apparatus for installing a program provided in the present disclosure, the target program can be automatically downloaded and installed after the device is connected to the network, so that an installation efficiency and accuracy of the program can be improved.

According to the technology provided by the disclosure, the problems of a low installation efficiency and labor consumption caused by a method for manually installing service software for devices one by one are solved.

It is to be understood that the description in this section is not intended to identify key or critical features of embodiments of the present disclosure, nor is it intended to limit the scope of the present disclosure. Other features of the present disclosure will become readily apparent from the following description.

### BRIEF DESCRIPTION OF THE DRAWINGS

The drawings are intended to provide a better understanding of the present disclosure and are not to be construed as limiting the disclosure. Wherein:
FIG. 1 is an exemplary system architecture diagram in which embodiments of the present disclosure may be applied;
FIG. 2 is a flowchart of an embodiment of a method for installing a program according to the present disclosure;
FIG. 3 is a flowchart of another embodiment of a method for installing a program according to the present disclosure;
FIG. 4 is a flowchart of yet another embodiment of a method for installing a program according to the present disclosure;
FIG. 5 is a schematic structural diagram of an embodiment of an apparatus for installing a program according to the present disclosure;
FIG. 6 is a schematic structural diagram of another embodiment of an apparatus for installing a program according to the present disclosure; and
FIG. 7 is a block diagram of an electronic device for implementing a method for installing a program according to an embodiment of the present disclosure.

### DETAILED DESCRIPTION OF EMBODIMENTS

Brief description of the drawings exemplary embodiments of the present disclosure are described below in connection with the accompanying drawings, in which various details of the embodiments of the present disclosure are included to facilitate understanding, and are to be considered as exemplary only. Accordingly, one of ordinary skill in the art will recognize that various changes and modifications may be made to the embodiments described herein without departing from the scope and spirit of the present disclosure. Also, for clarity and conciseness, descriptions of well-known functions and structures are omitted from the following description.

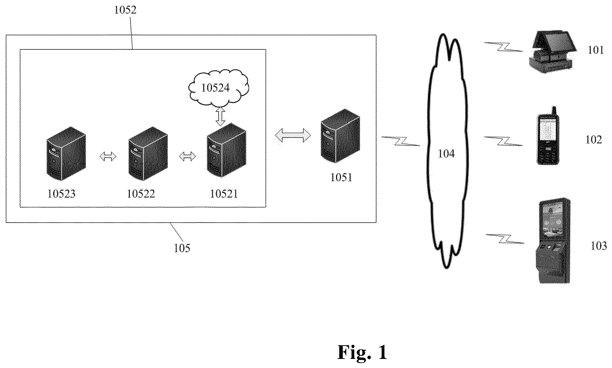

FIG. 1 illustrates an exemplary system architecture 100 in which an embodiment of a method for installing a program or an apparatus for installing a program of the present disclosure may be applied.

As shown in FIG. 1, the system architecture 100 may include devices 101, 102, and 103, a network 104, and a server 105. The network 104 serves as a medium for providing a communication link between the devices 101, 102, and 103 and the server 105. The network 104 may include various types of connections, such as wired, wireless communication links, or fiber optic cables, and the like.

The user may interact with the server 105 through the network 104 using the devices 101, 102, and 103 to receive or send messages, etc. The devices 101, 102, and 103 may be commercial devices on which various professional service application software (such as cash register software, meal ordering software, advertisement playing software, and the like) may be installed.

The devices 101, 102, and 103 may be various electronic devices having a display screen and supporting receipt of server messages, including, but not limited to, cash registers, ordering machines, self-service kiosks, self-service machines, and the like.

The devices 101, 102, and 103 may be hardware or software. When the devices 101, 102, and 103 are hardware, various electronic devices may be used, and when the devices 101, 102, and 103 are software, the electronic devices listed above may be installed. It may be implemented as a plurality of software or software modules (e.g., a plurality of software modules used to provide distributed services) or as a single software or software module. It is not specifically limited herein.

The server 105 may be a server providing background services for applications running on the devices 101, 102, and 103, a server providing support for service software running on the devices 101, 102, and 103, or a server providing software download and update services for the devices 101, 102, 103. The server 105 may acquire service software installation requests of the devices 101, 102, and 103, and issue service software installation addresses or installation packages to the devices 101, 102, and 103 according to the installation requests. The server 105 may include a management control center 1051, a construction service center 1052, which may include a packet management server 10521, a construction server 10522, a version management server 10523, and a cloud storage platform 10524. The server 105 may manage or maintain the service software through the version management server 10523, and the server 105 may construct or package codes through the construction server 10522 to form an installable service software installation package. The server 105 may perform data interaction with the devices 101, 102, and 103 through the management control center 1051. For example, the server 105 may receive the software installation requests and device model information sent by the devices 101, 102, and 103 through the management control center 1051. The server 105 may send the software installation address or the software installation package to the devices 101, 102, and 103 through the management control center 1051.

It should be noted that the software installing method provided by the embodiments of the present disclosure is generally performed by the devices 101, 102, and 103, and accordingly, the software installing apparatus is generally provided in the devices 101, 102, and 103.

It should be understood that the number of the commercial devices, the networks and the servers in FIG. 1 is merely illustrative. There may be any number of the terminal devices, the networks, and the servers as desired for implementation.

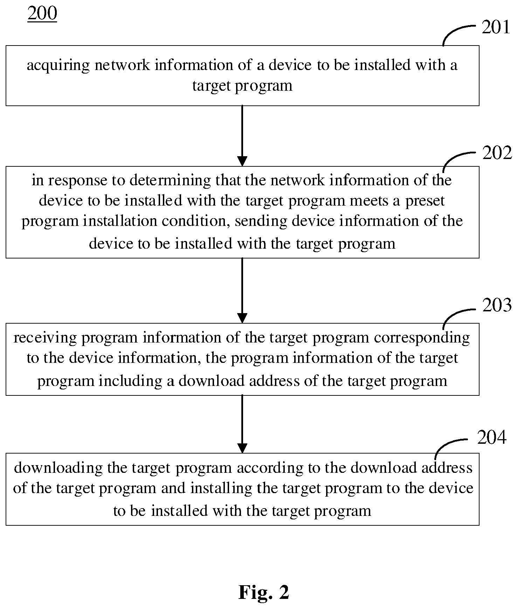

With continuing reference to FIG. 2, a flow 200 of an embodiment of the method for installing a program according to the present disclosure is shown. The method for installing a program includes the steps 201-204.

Step 201: acquiring network information of a device to be installed with a target program.

In the present embodiment, an execution body of a method for installing a program (such as the device shown in FIG. 1) may acquire the network information of the device to be installed with the target program. The target program may be an application program for providing a commercial service, such as a self-service cash register system, a self-service meal ordering system, a deposit system, and the like. The target program may also be an update pack or a patch program of the application program. The device to be installed with the target program may be an in-store commercial device, such as a self-service cash register, a self-service meal order machine, a bank cash recycling system, and the like. The network information may be a network connection state or a network security state of the current commercial device, such as whether the device is currently connected to the network and can receive service software installation information, or a current network speed or other network performance indices of the device, the current network security state of the device, and the like.

Step 202: in response to determining that the network information of the device to be installed with the target program meets a preset program installation condition, sending device information of the device to be installed with the target program.

In this embodiment, it is determined whether the network information of the device to be installed with the target program meets the preset program installation condition. If so, the device to be installed with the target program may send the device information of the device to a server in a wired or wireless manner. The device information may be information that can represent a device identity or a device specification and model, such as a device name, a device model, a device serial number, a device registration number, a device license number, a network address of the device, or a media access control address of the device, and the like. The preset program installation condition may be that the device is currently connected to the network and can receive service software installation information, the current network speed, or other network performance indices of the device meets a condition for receiving the software installation information, or the current network security state of the device meets a requirement for receiving the software installation information.

Step 203: receiving program information of the target program corresponding to the device information, the program information of the target program including a download address of the target program.

In this embodiment, the device to be installed with the target program may receive, in a wired or wireless manner, a download address of the target program to be installed sent by the server and corresponding to the device information of the device.

Specifically, after the server receives the device information sent by the device to be installed with the target program, it is possible to search for version information or name, corresponding to the device information, of the target program in local storage/cloud storage at the server according to the device information, and search for a download address of the target program according to the version information or the name, and then send the download address to the device to be installed with the target program, so that the device to be installed with the target program receives the download address of the target program.

Step 204: downloading the target program according to the download address of the target program and installing the target program to the device to be installed with the target program.

In the present embodiment, the device to be installed with the target program may access, in a wired or wireless manner, the download address by using a software installation service module preset in the device according to the download address of the target program, and download the target program, and then may install the target program in the device through the software installation service module.

According to the method for installing a program provided in the present embodiment, the target program is automatically downloaded and installed after the devices connected to the network, the installation efficiency and accuracy of the program can be improved, and the labor cost can be reduced.

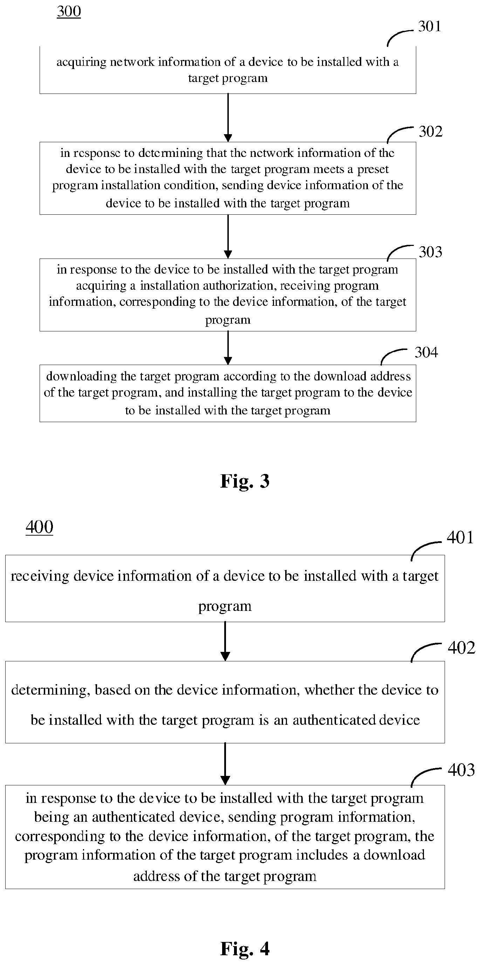

Referring further to FIG. 3, there is shown a flow 300 of another embodiment of a method for installing a program. The flow 300 of the method for installing a program includes the following steps 301-303.

Step 301: acquiring network information of a device to be installed with a target program.

Step 302: in response to determining that the network information of the device to be installed with the target program meets a preset program installation condition, sending device information of the device to be installed with the target program.

The step 301 and the step 302 of this embodiment are consistent with the step 201 and the step 202 of the foregoing embodiment, respectively. For a specific implementation of the step 301 and the step 302, reference may be made to the description of corresponding steps in the foregoing embodiment, and details are not described herein.

Step 303: in response to the device to be installed with the target program acquiring a installation authorization, receiving program information, corresponding to the device information, of the target program.

In this embodiment, first, it is determined whether the device to be installed with the target program has the installation authorization/installation license. If the device has the installation authorization/installation license, the management control center of the server may initiate a program installation request to the construction service center of the server according to the device information sent by the device, the construction service center searches for a program installation package and a download address of the corresponding target program according to the device information, and then returns the download address to the management control center, and the management control center sends the download address to a data synchronization service module in the device, so that the device receives the download address of the target program. Alternatively, if the device does not have the installation authorization/installation license, an alert message may be generated to remind an operation and maintenance person that there is an intrusion of an illegal device or a production of a counterfeit/infringing product, or the like.

In this embodiment, the method for determining whether the device to be installed with the target program has the installation authorization/installation license may be performed by: determining, by the management control center of the server, whether the device is a registered device/legal device based on the device information (such as the device serial number) after receiving the device information sent by the device.

In the present embodiment, through performing authorization determination on the device to be installed with the target program, it is possible to prevent an unauthorized illegal device or counterfeit device from installing the target program, from applying the unauthorized illegal device or counterfeit device to a merchant, thereby protecting information property security of the user. Meanwhile, it is possible to prevent the server from being intruded by the unauthorized device, thereby protecting the system security.

Step 304: downloading the target program according to the download address of the target program, and installing the target program to the device to be installed with the target program.

In the present embodiment, the device to be installed with the target program may access, in a wired or wireless manner, the download address by using the program installation module preset in the device according to the download address of the target program, and download the target program, and then may install the target program to the device through the program installation module.

In some alternative implementations of the embodiments described above in connection with FIGS. 2 and 3, the method for installing a program further includes sending installation state information of the target program.

In the present embodiment, the device to be installed with the target program may send the installation state information of the target program to the server in a wired or wireless manner. The installation state information may be error information/warning information during performing installation, debugging information/compatibility information/an operation result after the installation is completed, and the like. The server or the device may optimize and upgrade the target program or an installation process according to the installation information to improve an efficiency and accuracy of the program installation.

In some alternative implementations of the above-described embodiments described in connection with FIGS. 2 and 3, the network information and the device information of the device to be installed with the target program are acquired in the following manner: running preset automatic installation software in the device to be installed with the target program, and acquiring the network information and the device information of the device through a daemon process.

In the present embodiment, the device to be installed with the target program may be installed with the automatic installation software including the daemon process in advance at the factory. After the device is powered on/booted, the automatic installation software starts the daemon process, and the daemon process monitors the network information and the device information of the current device through a network adapter.

According to the method for installing a program provided in the present embodiment, the target program is automatically downloaded and installed after the device is connected to the network, so that the installation efficiency and accuracy of the program can be improved.

Referring further to FIG. 4, a flow 400 of yet another embodiment of a method for installing a program is shown. The flow 400 of the method for installing a program includes the following steps 401-403.

Step 401: receiving device information of a device to be installed with a target program.

In the present embodiment, the execution body(for example, the server shown in FIG. 1) of the method for installing software may receive the device information of the device to be installed with the target program in a wired or wireless manner. The device information may be information that can represent a device identity or a device specification model, such as a device name, a device model, a device serial number, a device registration number, a device license number, a network address of the device, or a media access control address of the device, and the like.

Alternatively, the server receives the device information of the device to be installed with the target program through the management control center. The management control center is configured to provide the installation service of the target program, and can authenticate an installation permission of the target program and issue information required for installing a target program to the device having the installation permission.

Step 402: determining, based on the device information, whether the device to be installed with the target program is an authenticated device.

In the present embodiment, the server determines, based on the device information, whether the device to be installed with the target program is a device having a target program installation license. Specifically, after receiving the device information sent by the device, the management control center of the server determines whether the device is a registered device/legal device based on the device information such as the device serial number.

Alternatively, the server may determine, through the management control center of the server, whether the device to be installed with the target program is a device with the target program installation license.

Step 403: in response to the device to be installed with the target program being an authenticated device, sending program information, corresponding to the device information, of the target program, the program information of the target program includes a download address of the target program.

In this embodiment, if the server determines that the device to be installed with the target program is the device with the target program installation license, the download address, corresponding to the device information, of the target program may be sent to the device to be installed with the target program in a wired or wireless manner.

Alternatively, if the management control center of the server determines that the device to be installed with the target program is the device having the target program installation license, then the management control center of the server sends a program installation request to the construction service center of the server according to the device information of the device to be installed with the target program. Thereafter, the construction service center of the server may construct a target program installation package through the construction server, the version management server, and the package management server, and send the download address of the target program installation package to the management control center of the server. Then, the management control center of the server sends the download address of the target program to the device to be installed with the target program in a wired or wireless manner.

In some alternative implementations of the embodiment described in FIG. 4 above, the method for installing a program further includes: in response to the device to be installed with the target program is not a authenticated device, sending an alert message.

In this embodiment, if the management control center of the server determines that the device to the device to be installed with the target program does not have the target program installation license, the management control center may send the alert message to the operation and maintenance person, to remind that there is intrusion into the system from an illegal device, or there is a counterfeit device flowing into the market. In the present embodiment, through performing authorization determination on the device to be installed with the target program, it is possible to prevent the unauthorized illegal device or counterfeit device from installing the target program, and from applying the unauthorized illegal device or counterfeit device to the merchant, thereby protecting the information property security of the user. Meanwhile, it is possible to prevent the server from being intruded by the unauthorized device, thereby protecting the system security.

In some alternative implementations of the embodiment described in FIG. 4 above, the method for installing a program further includes: receiving installation state information of the target program of the device.

In the present embodiment, the server may receive the installation state information of the target program sent by the device in a wired or wireless manner. The installation state information may be error information/warning information during performing installation, debugging information/compatibility information/an operation result after the installation is completed, and the like. The server or the device may optimize and upgrade the target program or the installation process according to the installation information to improve the efficiency and accuracy of the program installation.

According to the method for installing a program provided in the present embodiment, the target program is automatically downloaded and installed after the device is connected to the network, so that the installation efficiency and accuracy of the program can be improved.

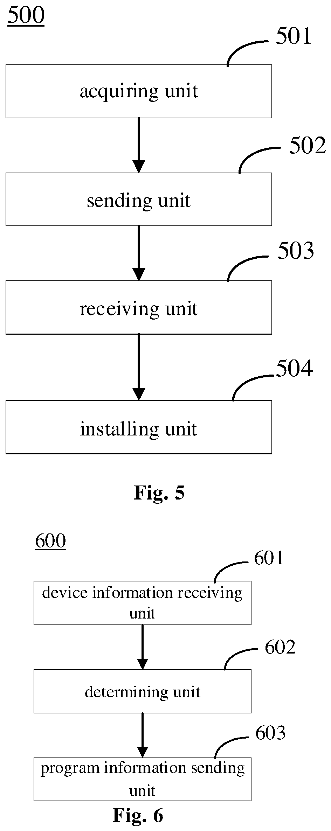

With further reference to FIG. 5, as an implementation of the method shown in each of the above figures, the present disclosure provides an embodiment of an apparatus for installing a program, which corresponds to the method embodiment shown in FIG. 2 and is particularly applicable to various electronic devices.

As shown in FIG. 5, the apparatus 500 for installing a program according to the present embodiment includes an acquiring unit 501, a sending unit 502, a receiving unit 503, and an installing unit 504. The acquiring unit 501 is configured to acquire network information of a device to be installed with a target program. The sending unit 502 is configured to send device information of the device to be installed with the target program in response to determining that the network information of the device to be installed with the target program meets a preset program installation condition. The receiving unit 503 is configured to receive program information, corresponding to the device information, of the target program, the program information of the target program comprising a download address of the target program. The installing unit 504 is configured to download the target program according to the download address of the target program and installing the target program to the device to be installed with the target program.

In some embodiments, the receiving unit 503 includes: an authorizing module, configured to receive the program information, corresponding to the device information, of the target program in response to the device to be installed with the target program acquiring a installation authorization.

In some embodiments, the apparatus 500 further includes: a sending module, configured to send the installation state information of the target program.

In some embodiments, the network information and the device information of the device to be installed with the target program are acquired by: running preset automatic installation software in the device to be installed with the target program, and acquiring the network information and the device information of the device through performing Daemon.

The elements in the above-described apparatus 500 correspond to the steps in the method described with reference to FIGS. 2 and 3. Thus, the operations, features, and technical effects achievable with respect to the method for installing a program described above are equally applicable to the device 500 and the elements contained therein, and will not be described in detail herein.

With further reference to FIG. 6, as an implementation of the method shown in each of the above figures, the present disclosure provides another embodiment of the apparatus for installing a program, which corresponds to the method embodiment shown in FIG. 4 and is particularly applicable to various electronic devices.

As shown in FIG. 6, the apparatus 600 for installing a program according to the present embodiment includes a device information receiving unit 601, a determining unit 602, and a program information sending unit 603. The device information receiving unit 601 is configured to receive device information of a device to be installed with a target program. The determining unit 602 is configured to determine, based on the device information, whether the device to be installed with the target program is an authentication device. The program information sending unit 603 is configured to send program information, corresponding to the device information, of the target program in response to the device to be installed with the target program being an authenticated device, the program information of the target program comprising a download address of the target program.

In some embodiments, the apparatus 600 further includes an alerting unit, configured to send an alert message in response to the device to be installed with the target program is not an authenticated device.

In some embodiments, the apparatus 600 further includes a state receiving unit, configured to receive installation state information of the target program of the device.

The elements in the above-described apparatus 600 correspond to the steps in the method described with reference to FIG. 4. Thus, the operations, features, and technical effects achievable with respect to the method for installing a program described above are equally applicable to the device 600 and the elements contained therein, and details are not described herein.

According to an embodiment of the present disclosure, the present disclosure further provides a system for installing a program, including a server and a client, the server communicatively connected with the client. The client is configured to acquire network information of a device to be installed with a target program; send device information of the device to be installed with the target program in response to determining that the network information of the device to be installed with the target program meets a preset program installation condition; receive program information, corresponding to the device information, of the target program, the program information of the target program comprising a download address of the target program; and download the target program according to the download address of the target program and install the target program to the device to be installed with the target program. The server is configured to receive device information of a device to be installed with a target program; determine, based on the device information, whether the device to be installed with the target program is an authenticated device; and send program information, corresponding to the device information, of the target program in response to the device to be installed with the target program being an authenticated device, the program information of the target program comprising a download address of the target program.

According to an embodiment of the present disclosure, the present disclosure also provides an electronic device and a readable storage medium.

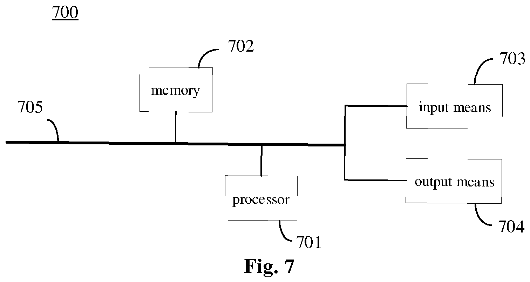

FIG. 7 is a block diagram of an electronic device 700 for installing a program according to an embodiment of the present disclosure. Electronic devices are intended to represent various forms of digital computers, such as laptop computers, desktop computers, worktables, personal digital assistants, servers, blade servers, mainframe computers, and other suitable computers. Electronic devices may also represent various forms of mobile devices, such as personal digital processing, cellular telephones, smart phones, wearable devices, and other similar computing devices. The components shown herein, their connections and relationships, and their functions are by way of example only and are not intended to limit the implementation of the present disclosure as described and/or claimed herein.

As shown in FIG. 7, the electronic device includes one or more processors 701, a memory 702, and an interface for connecting components, including a high speed interface and a low speed interface. The various components are interconnected by different buses and may be mounted on a common motherboard or otherwise as desired. The processor may process instructions executed within the electronic device, including instructions stored in or on a memory to display graphical information of the GUI on an external input/output device, such as a display device coupled to an interface. In other embodiments, multiple processors and/or multiple buses may be used with multiple processors and multiple memories, if desired. Similarly, a plurality of electronic devices may be connected, each providing a portion of the necessary operations (e.g., as a server array, a set of blade servers, or a multiprocessor system). A processor 701 is exemplified in FIG. 7.

The memory 702 is a non-instantaneous computer readable storage medium provided in this disclosure. The memory stores instructions executable by at least one processor to cause the at least one processor to perform the method for installing a program provided herein. The non-instantaneous computer readable storage medium of the present disclosure stores computer instructions for causing a computer to perform the method for installing a program provided in the present disclosure.

The memory 702, as a non-instantaneous computer readable storage medium, can be used to store a non-instantaneous software program, a non-instantaneous computer-executable program, and modules, such as program instructions/modules corresponding to a method for installing a program in an embodiment of the present disclosure (for example, the acquiring unit 501, the sending unit 502, the receiving unit 503, and the installing unit 504 shown in FIG. 5) . The processor 701 executes various functional disclosures and data processing of the server by running non-instantaneous software programs, instructions, and modules stored in the memory 702, that is, implements the method for installing a program in the above-described method embodiment.

The memory 702 may include a storage program area and a storage data area, the storage program area may store an operating system, an application program required for at least one function, the storage data area may store data or the like created according to the use of the electronic device for analyzing the information. In addition, memory 702 may include high speed random access memory, and may also include non-instantaneous memory, such as at least one magnetic disk storage device, flash memory device, or other non-instantaneous solid state storage device. In some embodiments, memory 702 may optionally include remotely disposed memory relative to processor 701, the remotely disposed memory may be connected via a network to an electronic device for analyzing the information. Examples of such networks include, but are not limited to, the Internet, enterprise intranets, local area networks, mobile communication networks, and combinations thereof.

The electronic device for analyzing the information may further include input means 703 and output means 704. The processor 701, the memory 702, the input means 703 and the output means 704 may be connected via a bus or otherwise, as illustrated in FIG. 7.

The input means 503 may receive input number or character information, and generate key signal input related to user settings and functional control of an electronic device for analyzing the information, such as a touch screen, a keypad, a mouse, a track pad, a touch pad, a pointer bar, one or more mouse buttons, a trackball, a joystick, or the like. The output device 504 may include a display device, an auxiliary lighting device (e.g., an LED), a tactile feedback device (e.g., a vibration motor), and the like. The display device may include, but is not limited to, a liquid crystal display (LCD), a light emitting diode (LED) display, and a plasma display. In some embodiments, the display device may be a touch screen.

The various embodiments of the systems and techniques described herein may be implemented in digital electronic circuit systems, integrated circuit systems, application specific ASICs (application specific integrated circuits), computer hardware, firmware, software, and/or combinations thereof. These various embodiments may include: being implemented in one or more computer programs that may execute and/or interpret on a programmable system including at least one programmable processor, the programmable processor may be a dedicated or general purpose programmable processor, may receive data and instructions from a memory system, at least one input means, and at least one output means, and transmit the data and instructions to the memory system, the at least one input means, and the at least one output means.

These computing programs (also referred to as programs, software, software applications, or code) include machine instructions of a programmable processor and may be implemented in high-level procedures and/or object-oriented programming languages, and/or assembly/machine languages. As used herein, the terms "machine readable medium" and "computer readable medium" refer to any computer program product, device, and/or device (e.g., magnetic disk, optical disk, memory, programmable logic device (PLD)) for providing machine instructions and/or data to a programmable processor, including: a machine readable medium that receives machine instructions as machine readable signals. The term "machine readable signal" refers to any signal used to provide machine instructions and/or data to a programmable processor.

To provide interaction with a user, the systems and techniques described herein may be implemented on a computer, the computer have a display device (e.g., a CRT (cathode ray tube) or LCD (liquid crystal display) monitor) for displaying information to the user; and a keyboard and a pointing device (e.g., a mouse or a trackball) through which a user can provide input to a computer. Other types of devices may also be used to provide interaction with a user; For example, the feedback provided to the user may be any form of sensory feedback (e.g., visual feedback, auditory feedback, or tactile feedback) ; and the input from the user may be received in any form, including acoustic input, speech input, or tactile input.

The systems and techniques described herein may be implemented in a computing system including a background component (e.g., as a data server), or a computing system including a middleware component (e.g., an application server), or a computing system including a front-end component (e.g., a user computer having a graphical user interface or a web browser through which a user may interact with embodiments of the systems and techniques described herein), or a computing system including any combination of such background component, middleware component, or front-end component. The components of the system may be interconnected by any form or medium of digital data communication (e.g., a communication network). Examples of communication networks include a local area network (LAN), a wide area network (WAN), and the Internet.

The computer system may include a client and a server. The client and server are typically remote from each other and typically interact through a communication network. The relationship between the client and the server is generated by a computer program running on the corresponding computer and having a client-server relationship with each other.

It is to be understood that the steps of reordering, adding or deleting may be performed using the various forms shown above. For example, the steps described in the present application may be performed in parallel or sequentially or in a different order, so long as the desired results of the technical solution disclosed in the present application can be realized, and no limitation is imposed herein.

The foregoing detailed description is not intended to limit the scope of the present disclosure. It will be appreciated by those skilled in the art that various modifications, combinations, subcombinations, and substitutions may be made depending on design requirements and other factors. Any modifications, equivalents, and modifications that fall within the spirit and principles of this application are intended to be included within the scope of this application.

## Claims

1. A method for installing a program, comprising:
acquiring network information of a device to be installed with a target program;
in response to determining that the network information of the device to be installed with the target program meets a preset program installation condition, sending device information of the device to be installed with the target program;
receiving program information, corresponding to the device information, of the target program, the program information of the target program comprising a download address of the target program; and
downloading the target program according to the download address of the target program and installing the target program to the device to be installed with the target program.

2. The method according to claim 1, wherein receiving program information, corresponding to the device information, of the target program, comprises:
in response to the device to be installed with the target program acquiring an installation authorization, receiving the program information, corresponding to the device information, of the target program.

3. The method according to claim 1, wherein the method further comprises:
sending installation state information of the target program.

4. The method according to any one of claims 1 to 3, wherein the network information and the device information of the device to be installed with the target program are acquired by:
running preset automatic installation software in the device to be installed with the target program, and acquiring the network information and the device information of the device through a daemon process.

5. A method for installing a program, comprising:
receiving device information of a device to be installed with a target program;
determining, based on the device information, whether the device to be installed with the target program is an authenticated device; and
in response to the device to be installed with the target program being an authenticated device, sending program information, corresponding to the device information, of the target program, the program information of the target program comprising a download address of the target program.

6. The method according to claim 5, wherein the method further comprises:
in response to the device to be installed with the target program is not an authenticated device, sending an alert message.

7. The method according to claim 5 or 6, wherein the method further comprises:
receiving installation state information of the target program of the device.

8. An apparatus for installing a program, comprising:
an acquiring unit, configured to acquire network information of a device to be installed with a target program;
a sending unit, configured to send device information of the device to be installed with the target program in response to determining that the network information of the device to be installed with the target program meets a preset program installation condition;
a receiving unit, configured to receive program information, corresponding to the device information, of the target program, the program information of the target program comprising a download address of the target program; and
an installing unit, configured to download the target program according to the download address of the target program and installing the target program to the device to be installed with the target program.

9. The apparatus according to claim 8, wherein the receiving unit comprises:
an authorizing module, configured to receive the program information, corresponding to the device information, of the target program in response to the device to be installed with the target program acquiring a installation authorization.

10. The apparatus according to claim 8, further comprising:
a sending module, configured to send the installation state information of the target program.

11. The apparatus according to any one of claims 8 to 10, wherein the network information and the device information of the device to be installed with the target program are acquired by:
running preset automatic installation software in the device to be installed with the target program, and acquiring the network information and the device information of the device through a daemon process.

12. An apparatus for installing a program, comprising:
a device information receiving unit, configured to receive device information of a device to be installed with a target program;
a determining unit, configured to determine, based on the device information, whether the device to be installed with the target program is an authenticated device; and
a program information sending unit, configured to send program information, corresponding to the device information, of the target program in response to the device to be installed with the target program being an authenticated device, the program information of the target program comprising a download address of the target program.

13. The apparatus according to claim 12, further comprising:
an alerting unit, configured to send an alert message in response to the device to be installed with the target program is not an authenticated device.

14. The apparatus according to claim 12 or 13, wherein the apparatus further comprises:
a state receiving unit, configured to receive installation state information of the target program of the device.

15. An electronic device, comprising:
at least one processor; and
a memory communicatively connected to the at least one processor;
wherein the memory stores instructions executable by the at least one processor, and the instructions, when executed by the at least one processor, cause the at least one processor to perform the method according to any one of claims 1 to 7.

16. A non-transitory computer readable storage medium storing computer instructions, wherein, the computer instructions are used to cause the computer to perform the method according to any one of claims 1 to 7.

17. A system for installing a program, comprises a server and a client, wherein the server communicatively connected with the client;
wherein the client is configured to:
acquire network information of a device to be installed with a target program;
send device information of the device to be installed with the target program in response to determining that the network information of the device to be installed with the target program meets a preset program installation condition;
receive program information, corresponding to the device information, of the target program, the program information of the target program comprising a download address of the target program; and
download the target program according to the download address of the target program and install the target program to the device to be installed with the target program; and
the server is configured to:
receive device information of a device to be installed with a target program;
determine, based on the device information, whether the device to be installed with the target program is an authenticated device; and
send program information, corresponding to the device information, of the target program in response to the device to be installed with the target program being an authenticated device, the program information of the target program comprising a download address of the target program.
